# FASCICULE DE BREVET EUROPEEN

(11) **EP 0 627 720 B1**
(45) Date de publication et mention de la délivrance du brevet: **30.07.1997**
(21) Numéro de dépôt: 94401082.6
(22) Date de dépôt: 16.05.1994
(51) Int. Cl.: G09B 5/06, G06K 19/06, G09B 7/06

(54) **Document portant une image ou un texte et pourvu d'une trame d'indexation, et système d'analyse documentaire associé**
Bild-oder Textinformation aufweisendes Dokument, versehen mit einem Indizierungs-Raster und zugehöriges System zur Dokumenten-Analyse
Document with an image or a text thereon provided with an indexing rasterand associated document analysing system

(30) Priorité: 21.05.1993 FR 9306101
(43) Date de publication de la demande: 07.12.1994
(73) Titulaire: CHERLOC, F-85002 La Roche-sur-Yon Cédex (DE)
(72) Inventeur: Lamoure, Jacques, F-92190 Meudon (FR)
(74) Mandataire: Lhuillier, René

(56) Documents cités:
- EP-A- 0 042 155
- EP-A- 0 299 383
- EP-A- 0 543 717
- WO-A-81/00476
- WO-A-83/02842
- FR-A- 2 608 294
- US-A- 4 481 412
- US-A- 4 627 819
- US-A- 4 926 035

## Description

L'invention est relative à un document portant une image ou un texte, décomposé en un grand nombre de zones élémentaires auxquelles sont associés respectivement un grand nombre d'index.

Un tel document est par exemple connu du brevet US-A-4 481 412. L'état de la technique comprend aussi le document EP-A-0 543 717, publié le 26.05.93. Cependant, ce document appartient à l'état de la technique selon l'Article 54(3) CBE et ne peut pas être pris en considération pour l'appréciation de l'activité inventive (voir l'Article 56 CBE).

Le but général de l'invention est de proposer des moyens pour pouvoir associer, à toute partie d'image ou à tout mot d'un texte, un ensemble d'informations contenues dans une base de données informatiques, ces informations consistant notamment en une description de la partie d'image ou en une liste de renseignements y relatifs et, dans le cas d'un mot de texte, de renseignements de type linguistique ou à caractère éducatif et littéraire.

Le mot "image" englobe toutes sortes de représentations de personnes, de choses, de sites, obtenues par tout procédé tel que la peinture, le dessin, la photographie, l'imprimerie. Il vise une image unique et continue couvrant l'ensemble de la surface du document, ou bien une image composée de plusieurs images élémentaires formant un ensemble, ou encore une juxtaposition d'images indépendantes les unes des autres.

En ce qui concerne le problème consistant à disposer un grand nombre d'informations sur un document, on expose ci-après la situation actuelle dans le domaine particulier de la cartographie.

A l'heure actuelle, on utilise en cartographie deux approches qui s'ignorent mutuellement dans une large mesure. L'approche la plus ancienne, constituée par l'utilisation de cartes portant une représentation graphique, reste très largement utilisée, aussi bien pour les applications professionnelles que pour les applications de masse. Les cartes donnent une information globale directement accessible et familière à tous les utilisateurs potentiels. Elles restent maniables jusqu'à des formats importants, de l'ordre du m². Lorsqu'elles sont établies par des techniques d'impression modernes, maintenant bien maîtrisées, elles permettent d'atteindre une finesse de trait très élevée : beaucoup de cartes disponibles à bas prix sont réalisées en polychromie par superposition de trames constituées chacune par une matrice de points au pas de 100 µm ou moins (jusqu'à 25 µm), avec une précision de positionnement des points d'environ 10 µm.

En contrepartie de ces avantages, la carte traditionnelle à représentation graphique présente des limitations. En particulier, la quantité d'informations utiles que l'on peut inscrire sur une carte sans dégrader sa lisibilité est limitée. Cela conduit souvent à reporter la majeure partie des informations dans une annexe, c'est-à-dire à constituer un atlas. Le texte et l'information graphique sont raccordés généralement l'un à l'autre par un simple carroyage dont chaque carré est identifié, par un couple lettre-chiffre ou par un nombre. Ce carroyage ne donne qu'une indication grossière et oblige de plus à se reporter à des indications données en marge de la carte (voir document FR-A-2 639 452).

L'approche informatique de la représentation géographique a jusqu'ici essentiellement consisté à définir une image point par point, sous forme d'un tableau, dans une mémoire. Même si on utilise des algorithmes de représentation sous forme simplifiée, l'information nécessaire exige de très gros espaces en mémoire, pouvant aller jusqu'à plusieurs centaines de millions d'octets pour une seule carte. De plus, les dispositifs d'affichage visuel existants sont très loin de donner la même résolution que les cartes graphiques traditionnelles. Un moniteur professionnel à haute résolution affiche une image sous forme de pixels assimilables chacun à un carré d'environ 300 µm de côté.

La présente invention vise donc à fournir un document exploitant les qualités de l'image et du texte traditionnels, mais utilisable en association avec des moyens de stockage de type informatique, et cela sans dégrader l'image ou texte originel.

Pour cela, chaque index comprend un groupement de points porté sur le document à proximité de la zone élémentaire associée et constituant un code spécifique de ladite zone, l'ensemble des index constituant une trame de localisation couvrant ladite image ou ledit texte et superposée à ceux-ci, chaque groupement de points pouvant être lu par des moyens de lecture optique coopérant avec un système informatique comportant un support de données adressable au moyen desdits index.

Chaque index de localisation sert de clé d'accès à des informations qui ne sont pas portées sur le document, peuvent différer selon la destination de celui-ci et sont susceptibles d'être aisément mises à jour. Dans le domaine géographique par exemple, tout le texte d'un atlas, toutes les relations logiques et topologiques, toutes les formules de calculs peuvent être conservés sur un support informatique de données appartenant à un calculateur d'architecture classique, éventuellement au format de poche. En effet, le volume de mémoire est très réduit puisque le calculateur est dispensé de toutes les fonctions graphiques et des stockages les plus volumineux.

L'adressage de lecture dans le support informatique peut s'effectuer de façon simple à l'aide de moyens de lecture optique qu'il suffit de poser sur la carte à l'emplacement où des renseignements sont recherchés. Ces moyens de lecture peuvent se limiter à un crayon optique ayant un champ d'analyse représentant 2 à 5 fois, dans chaque direction, l'encombrement d'un index. Bien que divers modes de codage soient possibles, il semble particulièrement intéressant d'utiliser un index constitué par un bloc rectangulaire de points imprimés suivant plusieurs lignes de même longueur. Ces lignes sont avantageusement séparées par des lignes vides et il est également avantageux de ne coder qu'un pixel sur deux de la trame dans une ligne, le pixel intermédiaire restant vide. Par ailleurs, un bloc sur deux est laissé vide, les blocs de codage constituant alors une trame discontinue tel qu'un damier qui facilite le repérage et le décodage du bloc le mieux centré dans le champ d'analyse du crayon, au cas où plusieurs blocs y apparaissent.

On connaît déjà de nombreuses encres sécuritaires qui ont une réponse, c'est-à-dire une brillance, très faible lorsqu'elles sont éclairées en lumière visible et qui ont en revanche une réponse (réflectivité ou fluorescence) forte dans une raie de spectre déterminée lorsqu'elles sont éclairées par une lumière située hors du spectre visible, généralement dans l'ultraviolet. Le crayon de lecture comporte alors des moyens d'illumination locale du document par une lumière d'excitation de l'encre sécuritaire et un filtre destiné à isoler la longueur d'onde de réponse de l'encre.

L'invention sera mieux comprise à la lecture de la description qui suit de modes particuliers de réalisation, donnés à titres d'exemples non limitatifs, et se réfère aux dessins qui l'accompagnent, dans lesquels :

La figure 1 est une représentation, à très grande échelle pour faire apparaître le tramage, d'un fragment de carte géographique traditionnelle le long d'une côte (les couleurs cyan et jaune étant respectivement représentées par des points quadrillés et des points vides).

La figure 2 montre schématiquement une représentation possible du code 16384 à l'aide d'un bloc de 10 x 10 pixels, à échelle très agrandie.

La figure 3 montre la représentation de quelques chiffres dans le code "trois parmi cinq" utilisé pour la représentation de la figure 2.

La figure 4 montre, à échelle agrandie, une région dans laquelle la trame de localisation présente une succession d'index en damier.

La figure 5 représente, sans agrandissement, une portion de carte à laquelle est superposée la trame de localisation selon l'invention.

La figure 6 est une variante de la figure 2.

Les figures 7 à 9 illustrent, l'une une plaquette électronique portant un certain nombre de circuits intégrés, la seconde une page de catalogue présentant des articles destinés à la vente, et la troisième un paysage, ces trois figures étant destinées à recevoir la trame de localisation selon l'invention.

Les cartes géographiques traditionnelles sont constituées de matrices de points répartis suivant une trame régulière. Dans le cas fréquent des cartes en tétrachromie, on utilise trois trames de couleur, cyan (pour les zones d'eau), verte (pour la végétation), jaune (pour les zones désertiques) dont la superposition permet des teintes supplémentaires, et une trame noire, notamment pour les inscriptions.

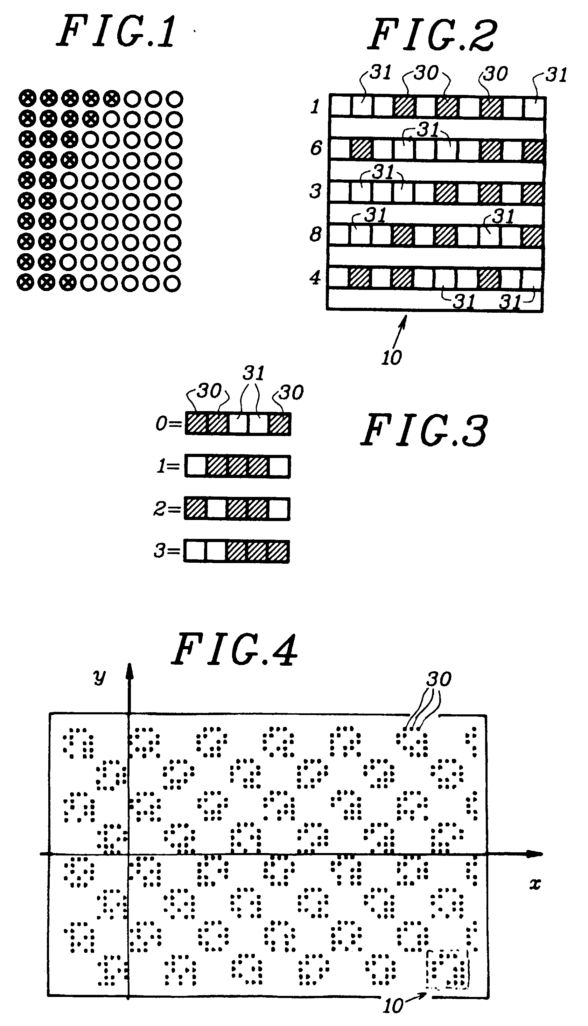

Dans le processus classique d'imprimerie, chaque trame est matérialisée sous forme d'un masque sur un film photograhique de transparence variable suvant les points, ou typon. La figure 1 montre, à titre d'exemple, un fragment de carte, très agrandi pour faire apparaître les points de la trame. De part et d'autre du rivage dans une zone désertique, les points sont cyan et jaune.

Il existe de nombreuses autres méthodes de fabrication de cartes, dont certaines mieux adaptées à des applications particulières. On peut notamment imprimer les cartes à l'aide d'une imprimante à jet d'encre ou électrostatique, surtout lorsque des indications sont fréquemment modifiées en vue de les adapter à une mission particulière. L'invention est également applicable au cas d'une représentation graphique originellement continue, mais ultérieurement tramée (photo aérienne par exemple). Dans le cas des photographies numériques issues par exemple des scanneurs aéroportés ou des satellites d'observation et reproduites grâce à des photo-restitueurs, l'invention s'applique particulièrement bien grâce à une incrustation de la trame de localisation directement dans les fichiers numériques, avant restitution.

Pour mettre en oeuvre l'invention, on superpose, aux points de représentation graphique, des codes disjoints constitués sur une trame qui est superposée aux indications graphiques. Les processus d'imprimerie classiques permettent sans difficulté d'imprimer des points de 50 à 100 µm de diamètre localisés à mieux que 10 µm près à l'intérieur d'un motif. On peut notamment utiliser un motif carré d'environ 1 millimètre x 1 millimètre constitué de points d'environ 100 µm de diamètre. Pour faciliter le repérage et le décodage, il est avantageux d'adopter un motif constitué de lignes de points de codage séparés par des lignes vides, chaque emplacement destiné à un point de codage étant séparé des emplacements adjacents par un espace vide.

Dans le cas envisagé plus haut d'un motif de 1 millimètre x 1 millimètre, cela conduit à disposer de cinq lignes ayant chacune cinq emplacements de codage et cinq espaces. On peut notamment utiliser un code binaire d'identification des chiffres de 0 à 9 du type "3 parmi 5", indiqué en figure 3, comprenant trois emplacements de codage 30 sur lesquels est disposé un point, et deux emplacements de codage 31 dépourvus de point. Les chiffres ainsi codés sont indiqués sur la figure 3, à gauche de chaque ligne. L'appellation "3 parmi 5" couvre le cas inverse où les trois emplacements 30 sont laissés vides, et les deux emplacements 31 comportent un point. Ce code a l'intérêt de rendre facile la localisation d'un index, du fait que chaque ligne comporte le même nombre de points ayant une même valeur radiométrique, c'est-à-dire une même intensité lumineuse dans la couleur dans laquelle ils sont représentés. La figure 2 montre un tel index 10 où, pour chaque ligne de codage, les deux emplacements de codage vides 31 ont la même brillance que les points de trame n'appartenant pas à un index et relatifs à la trame de représentation graphique de la carte, tandis que les emplacements de codage 30 portant les points de codage ont une brillance supérieure. Dans l'exemple de la figure 2, l'index 16 384 est représenté sur un motif à cinq lignes "actives" et cinq emplacements par ligne. Cinq lignes par motif suffisent pour coder 100 000 positions.

L'index de la figure 2 est donc construit à partir d'une matrice élémentaire de pixels composant une matrice de plus grandes dimensions, laquelle constitue la face photosensible d'un crayon de lecture optique, les points disposés sur la matrice élémentaire réalisant un codage binaire de certains pixels actifs de cette matrice.

On notera que l'index carré de la figure 2 est sensiblement isotrope, les points 30 étant répartis approximativement dans toutes les directions autour d'un centre de l'index, ce qui ressort aussi de l'observation des différents index 10 de la figure 4 : cet agencement permet de réaliser un codage quasi ponctuel d'une carte. A l'inverse, un index ayant une forme aussi anisotrope qu'une ligne de points, serait moins approprié au codage recherché. D'une manière plus générale, une matrice comportant un nombre voisin de lignes et de colonnes sera considérée comme sensiblement isotrope.

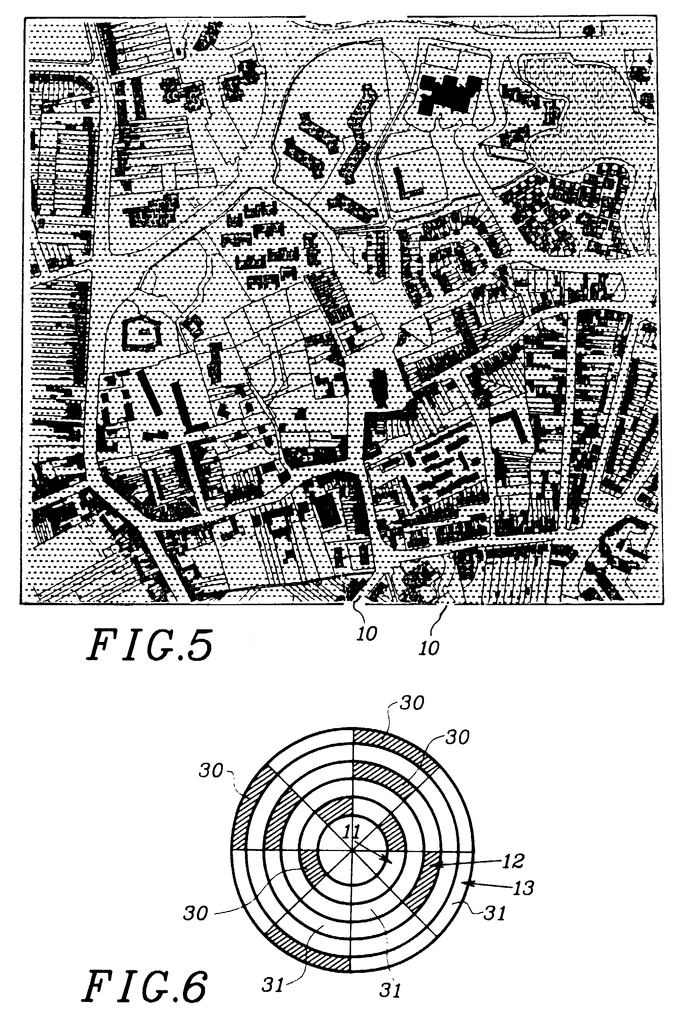

Un autre exemple d'index isotrope est représenté sur la figure 6 où les "lignes" actives sont ici des cercles concentriques 11 à 13, séparés les uns des autres par des cercles inactifs, les points 30 et les vides 31 correspondant à ceux de la figure 2 étant repérés.

On notera que la densité des points sur l'index de la figure 2 est faible puisque celui-ci comporte quinze points sur cent pixels. Ce choix contribue à rendre peu visible à l'oeil nu la trame de localisation sur la carte. D'une manière plus générale, il faut entendre par "densité faible", une densité inférieure à 20 points sur cent pixels dans le cas d'une trame de codage visible à l'oeil nu et inférieure à 50 points sur cent pixels dans le cas d'une trame de codage invisible à l'oeil nu.

Dans le cas de l'utilisation d'une encre sécuritaire, non visible par l'utilisateur, on ne dégrade pas l'aspect de la carte ; les index sont faciles à isoler à l'aide d'un lecteur ; on peut directement superposer chaque index au point qu'il concerne.

Dans les zones de la carte où les index différents sont très nombreux, chaque index peut être imprimé une seule fois exactement au point concerné. Dans la majorité des cas, les blocs codent le couple de coordonnées cartésiennes de leur emplacement ; ainsi, tous les blocs de la trame de localisation indiquent un code différent.

Pour faciliter encore le repérage et le décodage du motif le mieux centré dans le champ d'analyse des moyens de lecture optique, il est possible de ne tramer qu'un bloc sur deux et de disposer les blocs tramés en un damier rectangulaire et régulier comme le montre la figure 4. Les blocs peuvent au surplus être indexés en adoptant, comme schéma d'indexation des blocs, une courbe ayant la propriété de remplir tout le carré et donc d'autoriser la définition d'un point avec un seul paramètre. Parmi ces courbes, on peut notamment citer la courbe de Hilbert dont une description pourra être trouvée dans l'article "Fractals et dynamique des itérations", Claude BREZINSKI, AFCET/INTERFACES No 88, février 1990, page 3.

On notera que la disposition des points de l'index de la figure 2 en lignes et colonnes facilite le repérage, celles-ci définissant deux directions orthogonales x, y (figure 4), permettant d'orienter la carte autour de l'index considéré. Au surplus, la disposition des index les uns par rapport aux autres peut aussi fournir ce repérage : la disposition en damier des index 10 de la figure 4 définit encore les deux directions orthogonales x, y.

Les moyens informatiques associés à la carte comportent une mémoire de masse contenant une base de données et adressable à l'aide de l'index, une unité de traitement permettant d'interroger la base de données à l'aide d'un organe d'entrée tel qu'un clavier, et un organe d'affichage alpha-numérique. L'adressage pour disposer des informations correspondant à un index donné s'effectue à l'aide de moyens électro-optiques tels qu'un crayon de lecture à matrice de capteurs à couplage de charges ayant un champ dont le diamètre correspond généralement à peu près à trois fois la dimension du motif. Lorsque les motifs ont la constitution particulière décrite plus haute, le crayon peut avoir un champ de 5 millimètres de diamètre et comporter une optique de focalisation et une caméra CCD. L'unité de traitement est programmée de façon à effectuer un traitement morphologique simple de localisation, puis de décodage de l'index. L'unité de traitement peut être complétée par un interface de liaison avec un récepteur de système global de positionnement, disponible dans le commerce à l'heure actuelle et permettant de déterminer la position du récepteur à une dizaine de mètres près, par référence à la position de vingt-quatre satellites en orbite.

L'unité de traitement peut être prévue pour permettre l'adressage des données en mémoire par mots-clé ou par des questions types, de façon à permettre de lire la réponse à des questions, même complexes, telles que :
- nombre d'hôtels dans la ville désignée par l'index sur lequel le crayon est pointé,
- villes de plus de cinq mille habitants à moins de cent kilomètres par la route dans le département dont le crayon pointe la préfecture,
- cap à suivre depuis l'emplacement pointé sur la carte jusqu'à un autre emplacement, également pointé sur la carte où les données sont fournies à l'aide du clavier.

L'utilisation d'une encre sécuritaire, n'ayant pas de réponse dans le visible, permet d'imprimer les index sur la carte sans dégrader la lisibilité ni détériorer la localisation. Ces avantages ont peu d'intérêt dans le cas des zones homogènes de la carte, comme les espaces maritimes. Dans ces espaces, identifiés par une trame cyan, les index peuvent être imprimés, de façon répétitive ou non, à l'aide de motifs prévus sur la trame cyan, à la place de ceux inscrits en encre sécuritaire ou en addition à eux, par exemple pour fournir des indications proprement maritimes, telles que la bathymétrie. De façon plus générale, sur une carte ayant un fond d'image photographique, il suffit que la trame soit en simple incrustation photographique dans une teinte qui, si elle est visible, gêne le moins possible l'observation de l'image.

Les cartes nécessaires à la mise en oeuvre de l'invention peuvent être fabriquées par des procédés très variés, entre lesquels on choisira suivant l'application.

On peut répartir ces applications en trois grandes catégories.

Pour les applications professionnelles, telles que la préparation de mission, qui exigent en général une carte munie de renseignements propres à chaque mission particulière, la carte peut être constituée immédiatement avant la mission, à l'aide par exemple d'une imprimante à jet d'encre, à partir d'un extrait de base de données nécessaire à la mission, cette base étant stockée sur une mémoire à semi-conducteur.

La carte peut soit être réalisée par inscription des index à l'aide d'une imprimante à jet d'encre sécuritaire, sur une carte existante, soit être constituée sous forme simplifiée par extrait des données de la carte existante (constituée à partir de bases de données telles que celles de l'Institut Géographique National, du Service Hydrographique de la Marine, de l'Office National des Forêts, etc...), éditée avec la trame de localisation sur une imprimante à jet d'encre en plusieurs passages.

Pour les applications semi-professionnelles, par exemple pour les navigateurs, les données n'ont plus besoin d'être préparées pour une mission particulière mais distribuées par zones géographiques. Dans ce cas, la carte a simplement besoin d'être munie d'index. Les moyens informatiques associés constitueront notamment l'équivalent des instructions nautiques, des ouvrages donnant les marées, etc. L'association avec un récepteur de système global de positionnement ou GPS présente un intérêt particulier pour cette application.

Enfin, les applications de masse sont toutes celles liées au tourisme et au transport : elles permettent aux éditeurs de cartes, de guides et de plans, de substituer les moyens informatiques aux livres et elles permettent au surplus de diminuer la diversité des cartes et de développer la variété des informations sous forme thématique, par exemple en prévoyant des bases de données consacrées à la circulation routière, aux monuments historiques, aux points de vente, à l'hôtellerie.

Dans ce cas, les cartes peuvent être fabriquées de façon entièrement traditionnelle, si ce n'est que l'édition exige un cinquième typon, destiné à l'impression des index en encre sécuritaire.

Un exemple en grandeur réelle de carte tramée selon l'invention est représenté sur la figure 5 qui concerne un relevé cadastral. La trame de localisation, superposée aux motifs cartographiques constitués notamment par des rues, des contours de terrains, et des maisons, est composée d'index 10 disposés en damier recouvrant uniformément toute la carte, chacun apparaissant, à l'oeil nu, comme un seul point.

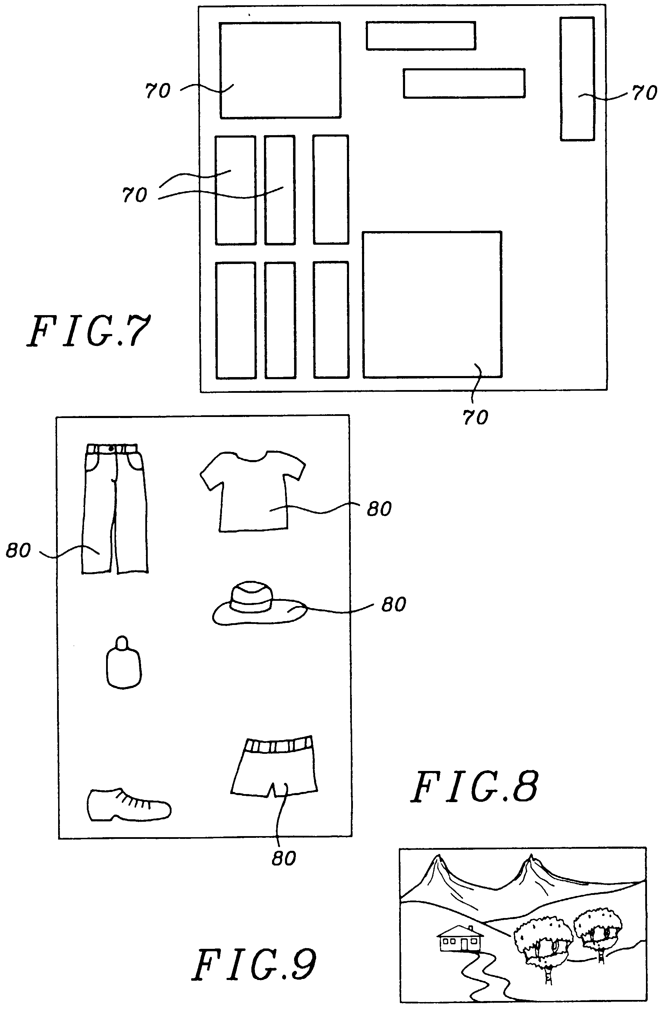

Les figures 7 à 9 sont relatives à des applications de l'invention dans lesquelles l'image à coder n'est pas relative à des informations cartographiques. La figure 7 représente l'image d'une plaquette électronique portant plusieurs circuits intégrés 70 répartis sur sa surface, chaque circuit se présentant de façon connue en soi sous la forme d'un bloc de faibles dimensions portant un grand nombre de pattes de liaison électrique non représentées sur la figure, qui traversent la plaquette pour être reliées en différents endroits d'un circuit imprimé ou piste conductrice porté par la face opposée de la plaquette.

La nomenclature d'équipement d'une telle plaquette électronique,même très complète, tient largement dans la mémoire d'un ordinateur de poche ; on peut même envisager de stocker la nomenclature de toute une série de tels sous-ensembles.

En revanche, les plans d'implantation et de routage (les connexions se font sur plusieurs couches de circuits imprimés) imposent absolument un stockage sur disque et ne sont que très partiellement affichables sur un écran à cristaux liquides.

Il est donc proposé d'utiliser de simples photographies des plaquettes qui ont en plus l'avantage d'une totale conformité au produit, et de fournir seulement les nomenclatures et les connexions sous forme digitale. A cet effet, une trame de localisation selon l'invention est rapportée sur la photographie de plaquette. Compte tenu de l'espacement important des circuits intégrés, en compareson avec les informations géographiques de la figure 5, la densité des index pourra être faible. Sur chaque circuit, on répètera avantageusement un certain nombre de fois l'index qui lui est associé, de façon à couvrir toute la surface apparente du circuit et garantir ainsi une identification de celui-ci, même dans le cas où le crayon optique est posé de façon approximative sur sa surface.

Le renseignement complet sur un circuit précis est obtenu en le désignant avec un crayon optique, sur la photographie.

L'application première du procédé est la maintenance sur le terrain : l'argent de maintenance n'emmène qu'un lot d'images, un ordinateur de poche et le crayon optique ; il peut en outre consigner son intervention dans la fiche locale du circuit incriminé.

On peut également imaginer qu'un fournisseur constitue un catalogue complet mais très compact de ses produits avec ce procédé.

La figure 8 présente une page de catalogue de vente présentant des dessins ou photographies d'articles 80 tels que des vêtements ou d'autres biens de consommation courante. A la différence des exemples des figures 5 et 7, la position des éléments 80 à identifier sur la page ou photographie est aléatoire : la trame de localisation selon l'invention a simplement pour but d'associer à chaque article les informations dont le consommateur a besoin pour effectuer son choix (description de l'article, prix, procédure de commande et de livraison, etc...). La trame sera ici conçue de la même façon que dans le cas de la figure 7.

En variante à la figure 8, la trame selon l'invention est appliquée à une page d'encyclopédie illustrée, pour associer des légendes d'ordre scientifique, artistique ou littéraire à des photos ou dessin disposés sur la page.

Sur la figure 9, est représenté un paysage sous la forme d'un dessin, d'une peinture, d'une photo ou de tout autre moyen de création d'image. Ce paysage est destiné à recevoir une trame d'index dense permettant d'associer, à chaque zone élémentaire du paysage, une information particulière. Dans le cas où ce paysage est à vocation artistique, l'information pourra consister par exemple en des spécifications relatives à la couleur de la zone élémentaire considérée, donnant au peintre la nature et les proportions des couleurs de base à mélanger.

Un autre cas est celui où ce paysage représente fidèlement un site géographiquement déterminé. Dans le domaine touristique, éducatif, ou industriel, la trame fournira une légende associée à chaque édifice, formation du relief, lac, etc... visible sur l'image. Dans une autre application qui est l'ingénierie, l'image pourrait consister en une photographie de tout ou partie d'une installation industrielle telle qu'une raffinerie de pétrole.

L'invention s'applique aussi au codage d'un texte, un ou plusieurs index étant affectés à chaque mot du texte considéré. Parmi différentes applications, l'une d'elles pourra être la traduction automatique, dans une langue déterminée, du mot pointé par le crayon optique, une autre application étant l'utilisation d'un dictionnaire informatisé pour donner la définition du mot pointé par le crayon optique.

## Revendications

1. Document portant une image ou un texte, à l'exclusion d'une carte géographique, et décomposé en un grand nombre de zones élémentaires auxquelles sont associés respectivement un grand nombre d'index,
caractérisé en ce que chaque index comprend un groupement de points (10) porté sur le document à proximité de la zone élémentaire associée et constituant un code spécifique de ladite zone, l'ensemble des index constituant une trame de localisation couvrant ladite image ou ledit texte et superposée à ceux-ci, chaque groupement de points pouvant être lu par des moyens de lecture optique coopérant avec un système informatique comportant un support de données adressable au moyen desdits index.

2. Document selon la revendication 1, destinée à être lu par des moyens de lecture optique comprenant une matrice ordonnée de pixels, chaque index étant lu par une matrice élémentaire de pixels répartis de façon sensiblement isotrope, les points dudit groupement de points (10) étant répartis sur certains des pixels (30) de ladite matrice élémentaire de façon à réaliser un codage binaire de chacun d'eux.

3. Document selon la revendication 2, dans laquelle seulement certains pixels (30) de ladite matrice élémentaire portent un point de codage, ces pixels étant séparés les uns des autres par un ou plusieurs pixels sans point de codage.

4. Document selon la revendication 3, dans laquelle seule une faible partie desdits pixels (30) porte un point de codage.

5. Document selon l'une quelconque des revendications précédentes, dans laquelle les points de chaque groupement de points sont disposés les uns par rapport aux autres de façon à définir un repère comportant deux directions orthogonales (x, y), unique pour l'ensemble de la trame de localisation.

6. Document selon l'une quelconque des revendications 2 à 4, dans laquelle ladite matrice élémentaire (10) est constituée de plusieurs lignes et de plusieurs colonnes de pixels.

7. Document selon la revendication 6, dans laquelle certaines desdites lignes ou colonnes de pixels définissent ledit index, chaque ligne ou colonne portant des points répartis de façon à réaliser un code du type "2 parmi 5" représentant un chiffre de 0 à 9.

8. Document selon l'une quelconque des revendications précédentes, dans laquelle les différents groupements de points de la trame de localisation sont disposés les uns par rapport aux autres de façon à définir un repère comportant deux directions orthogonales (x, y).

9. Document selon la revendication 8, dans laquelle les différents groupements de points sont disposés selon un damier.

10. Système d'analyse documentaire comprenant un document selon l'une quelconque des revendications précédentes, caractérisé en ce qu'il comporte de plus un crayon de lecture optique présentant un champ d'analyse couvrant quelques index (10) juxtaposés, muni de moyens d'éclairement ayant une longueur d'onde déterminée, leur permettant d'effectuer une discrimination entre ladite trame de localisation et ladite image ou ledit texte.

## Patentansprüche

1. Bild- oder Textinformation aufweisendes Dokument mit Ausnahme einer geographischen Karte, welches in eine große Zahl von Elementarbereichen zerlegt ist, denen jeweils eine große Zahl von Indizes zugeordnet sind,
dadurch gekennzeichnet, daß jeder Index einen Verbund von Punkten (10) umfaßt, welcher auf dem Dokument in der Nähe des zugeordneten Elementarbereiches aufgetragen ist und einen spezifischen Code für diesen Bereich darstellt, wobei die Gesamtheit der Indizes ein Raster für die Ortserkennung darstellt, welches das Bild oder den Text überdeckt und diesem überlagert ist, wobei jeder Verbund von Punkten von optischen Lesemitteln gelesen werden kann, die mit einem Datenverarbeitungssystem zusammenarbeiten, welches einen mittels dieser Indizes adressierbaren Datenträger umfaßt.

2. Dokument nach Anspruch 1, welches dazu bestimmt ist, von einem optischen Lesemittel gelesen zu werden, welches eine geordnete Pixelmatrix aufweist, wobei jeder Index von einer im wesentlichen isotrop verteilten Elementarmatrix von Pixeln gelesen wird und die Punkte des Punkteverbands (10) über bestimmte Pixel (30) der Elementarmatrix so verteilt sind, daß sie eine binäre Codierung für jeden von ihnen abgeben.

3. Dokument nach Anspruch 2, in welchem nur bestimmte Pixel (30) der Elementarmatrix einen Punkt für die Codierung aufweisen, wobei diese Pixel voneinander über mehrere Pixels ohne Codierungspunkt getrennt sind.

4. Dokument nach Anspruch 3, in welchem nur ein kleiner Teil der Pixels (30) einen Codierungspunkt aufweisen.

5. Dokument nach einem der vorhergehenden Ansprüche, in welchem die Punkte eines jeden Punkteverbands zueinander so angeordnet sind, daß sie für das gesamte Raster für die Ortserkennung eine einzige Markierung definieren mit zwei aufeinander senkrecht stehenden Richtungen (x, y).

6. Dokument nach einem der Ansprüche 2 bis 4, in welchem sich die Elementarmatrix (10) aus mehreren Zeilen und mehreren Spalten von Pixeln zusammensetzt.

7. Dokument nach Anspruch 6, in welchem bestimmte Zeilen oder Spalten von Pixeln den Index definieren, wobei jede Zeile oder Spalte Punkte aufweist, die so verteilt sind, daß ein die Ziffern 0 bis 9 wiedergebender Code vom Typ "2 von 5" gebildet wird.

8. Dokument nach einem der vorhergehenden Ansprüche, in welchem die unterschiedlichen Punkteverbände des Rasters für die Ortserkennung zueinander so angeordnet sind, daß sie eine Markierung mit zwei aufeinander senkrecht stehenden Richtungen (x, y) definieren.

9. Dokument nach Anspruch 8, in welchem die unterschiedlichen Punkteverbände nach Art eines Schachbretts angeordnet sind.

10. Dokumentenanalysesystem mit einem Dokument nach einem der vorhergehenden Ansprüche, dadurch gekennzeichnet, daß es zusätzlich einen optischen Lesestift umfaßt, welcher ein einige nebeneinandergelegene Indizes (10) überdeckendes Analysefeld aufweist, wobei der Lesestift mit Beleuchtungsmitteln bestimmter Wellenlänge versehen ist, womit eine Unterscheidung zwischen dem Raster für die Ortserkennung und dem Bild oder dem Text bewirkt werden kann.

## Claims

1. Document bearing an image or text, excluding a geography map, and broken down into a large number of elementary regions respectively associated with a large number of indices, wherein each index includes a group of points (10) borne on the document close to the associated elementary zone and constituting a specific code of said zone, all the indices constituting a localization frame covering said image or said text and superimposed on the latter, each group of points being able to be read by optical read means cooperating with a data processing system comprising a data medium addressable to the device of said indices.

2. Document according to claim 1 and intended to be read by optical reading means including an ordinate matrix of pixels, each index being read by an elementary matrix of pixels distributed approximately isotropically, the points of said group of points (10) being distributed on some of the pixels (30) of said elementary matrix so as to embody a binary coding of each of them.

3. Document according to claim 2, wherein only certain pixels (30) of said elementary matrix bear a coding point, these pixels being separated from one another by one or several pixels without any coding point.

4. Document according to claim 3, wherein only a small part of said pixels (30) bears a coding point.

5. Document according to any one of the preceding claims, wherein the points of each group of points are disposed with respect to the others so as to define a mark comprising solely two orthogonal directions (x, y) for the entire localization frame.

6. Document according to any one of claims 2 to 4, wherein said elementary matrix (10) is formed of several lines and several columns of pixels.

7. Document according to claim 6, wherein certain of said lines or columns of pixels define said index, each line or column bearing points distributed in such a way as to embody a "2 from 5" type code representing a figure from 0 to 9.

8. Document according to any one of the preceding claims, wherein the various groups of points of the localization frame are disposed with respect to one another so as to define a mark comprising two orthogonal directions (x, y).

9. Document according to claim 8, wherein the various groups of points are disposed in the manner of a checkerboard.

10. Documentary analysis system including a document according to any one of the preceding claims, wherein it further comprises an optical reading pencil having an analysis field covering several indices (10) placed side by side and provided with illumination means having a specific wavelength enabling them to discriminate between said localization frame and said image or said text.
